# EUROPÄISCHE PATENTSCHRIFT

(11) **EP 2 584 351 B1**
(45) Veröffentlichungstag und Bekanntmachung des Hinweises auf die Patenterteilung: **30.08.2017**
(21) Anmeldenummer: 11186185.2
(22) Anmeldetag: 21.10.2011
(51) Int. Cl.: G01N 29/04, G01N 29/32, G01N 29/34

(54) **Erkennung von Spätheimkehrerechos bei der Ultraschallprüfung durch veränderte Impulsfolgefrequenzen**
Detection of ghost echos in ultrasound testing using altered pulse repetition frequencies
Reconnaissance d'échos à retour tardif lors du contrôle d'ultrasons par des fréquences modifiées de répétition d'impulsions

(43) Veröffentlichungstag der Anmeldung: 24.04.2013
(73) Patentinhaber: Siemens Aktiengesellschaft, 80333 München (DE)
(72) Erfinder: Clossen-von Lanken Schulz, Michael, 47661 Issum (DE); Obermayr, Stefan, 45475 Mülheim (DE)

(56) Entgegenhaltungen:
- AT-B- 365 442
- US-A- 6 046 960
- US-A- 6 082 198
- US-A1- 2010 106 432
- US-A1- 2011 005 322
- SERIZAWA M ET AL: "One method for eliminating echoes from false flaws in ultrasonic rail inspection", QUARTERLY REPORT OF RTRI, TOKYO, JP, Bd. 13, Nr. 1, 1. Januar 1972 (1972-01-01) , Seiten 56-57, XP009154949, ISSN: 0033-9008
- GABBANI VALERIO ET AL: "Pulse-echo ultrasonic digital system for distance measurements using linear frequency modulated signals", ALTA FREQUENZA RIVISTA DI ELETTRONICA,, Bd. 12, Nr. 3, 1. Juli 2000 (2000-07-01), Seiten 59-63, XP009154947,

## Beschreibung

Die vorliegende Erfindung betrifft ein Verfahren zur Erkennung von Spätheimkehrerechos bei der Durchführung von Ultraschallscans an einem Untersuchungsobjekt, in welchem nacheinander mittels eines Prüfkopfes Ultraschallpulse mit einem jeweiligen Zeitabstand von einem nachfolgenden Ultraschallpuls in das Untersuchungsobjekt zum Generieren von Pulsechos eingebracht werden.

Die zerstörungsfreie Prüfung von Werkstücken spielt eine wichtige Rolle bei der Qualitätssicherung und Wartung von aufwendig herzustellenden Produkten. Beispielsweise sind Turbinenschaufeln für Gasturbinen aus hochtemperaturfesten Superlegierungen hergestellt und weisen nicht selten ein gerichtet erstarrtes Kristallgefüge oder gar ein einkristallines Kristallgefüge auf, um die thermische Belastbarkeit weiter zu erhöhen. Der Herstellungsprozess für derartige Turbineschaufeln ist anspruchsvoll und aufwendig. Das Zerstören einer Turbineschaufel im Rahmen der Qualitätskontrolle ist daher nicht wünschenswert. Weiterhin ist es wünschenswert, jede hergestellte Turbinenschaufel auf ihre Qualität hin zu überprüfen, was eine zerstörungsfreie Prüfung erfordert. Aber auch im Rahmen der Wiederaufarbeitung von verschlissenen Turbinenschaufeln (refurbishment) kommen häufig zerstörungsfreie Prüfungsverfahren zum Einsatz, um die innere Integrität des Gefüges der Turbinenschaufeln überprüfen zu können, bevor darüber entschieden wird, ob ein Wiederaufarbeiten der Turbinenschaufel möglich ist oder nicht.

Als zerstörungsfreies Prüfungsverfahren für ein Werkstück kommt häufig die Ultraschallprüfung zur Anwendung. Bei dieser wird ein Ultraschallsignal in das Material des Untersuchungsobjektes eingeschallt und anhand der Abschwächung durch das Untersuchungsobjekt hindurch tretender Signale oder anhand der Intensität im Innern des Untersuchungsobjektes reflektierter Signale eine Aussage über das Gefüge im Inneren abgeleitet. Dabei werden Ultraschallpulse in zeitlich kurzen Abständen, die durch die sogenannte Puls-Folge-Frequenz bestimmt sind (PRF: puls recurrence frequency) in das Untersuchungsobjekt eingebracht. Defekte im Inneren des Untersuchungsobjektes, beispielsweise Risse, Kavitäten, etc. erzeugen Echos der Ultraschallpulse, aus denen auf die Lage und die Größe des Defekts zurück geschlossen werden kann. Ein Verfahren und eine Vorrichtung zum Erzeugen eines Ultraschallbildes ist beispielsweise in EP 2 120 045 A1 beschrieben. In dem darin beschriebenen Verfahren erfolgt das Aufnehmen eines Ultraschallbildes anhand von Winkelscans, bei denen Ultraschallpulse unter verschiedenen Einschallwinkeln in das Untersuchungsobjekt eingebracht werden, um ein Ultraschallbild in der Form eines Kreissegmentes zu erhalten. Jeder Winkelscan wird dabei in einem Winkelbereich von -40° bis + 40° in 21 Schritten von je 4° durchgeführt. Aus mehreren Winkelscans wird dann ein Bild des Inneren des Untersuchungsobjektes erstellt.

Bei derartigen, auf der Reflektion von Ultraschallpulsen beruhenden Verfahren entstehen bei vielen Prüfobjekten jedoch Wiederholungsechos, die wegen der geringen Abschwächung des Ultraschallpulses beim Durchlaufen des Untersuchungsobjektes nach mehrmaliger Reflektion den Prüfkopf erreichen. Dabei kann es vorkommen, dass diese Pulsechos zeitlich den Prüfkopf erst erreichen, nachdem bereits weitere Ultraschallpulse ausgelöst wurden. Die Laufzeit der Wiederholungsechos kann dabei so hoch sein, dass das Wiederholungsecho den Prüfkopf erst während eines nachfolgenden Ultraschall-Winkelscans erreicht. Die Wiederholungsechos können dabei fälschlicherweise als Echo des zuletzt eingeschallten Pulses registriert werden, wodurch die Ergebnisse des Prüfungsverfahrens verfälscht werden.

Das beschriebene Phänomen kann vermieden werden, indem die Puls-Folge-Frequenz auf einen niedrigen Wert (also auf lange Zeitabstände zwischen den einzelnen Ultraschallpulsen) eingestellt wird, sodass Wiederholungsechos vor dem Aussenden des folgenden Ultraschallpulses beim Prüfkopf eingehen. In der Praxis führt dies jedoch zu inakzeptabel niedrigen Messraten und daher zu inakzeptablen Messdauern, da die Laufzeiten der Wiederholungsechos insbesondere bei großen Untersuchungsobjekten sehr lang werden können.

US 2011/0005322 A1 offenbart ein Ultraschallverfahren, bei dem das Pulswiederholungsintervall periodisch verändert wird. AT 365 442 B behandelt ein Ultraschallgerät, bei dem ein von einem vorhergehenden Ultraschallpuls verursachtes Pulsecho detektiert und als Auslöser für einen nachfolgenden Ultraschallpuls verwendet wird.

Aufgabe der vorliegenden Erfindung ist es daher, ein vorteilhaftes Verfahren zur Erkennung von Spätheimkehrerechos bei der Durchführung von Ultraschallscans an einem Untersuchungsobjekt zur Verfügung zu stellen, in welchem die Gefahr von Verwechslungen von Wiederholungsechos mit Pulsechos vermieden wird oder zumindest verringert ist.

Diese Aufgabe wird durch ein Verfahren zur Erkennung von Spätheimkehrerechos bei der Durchführung von Ultraschallscans nach Anspruch 1 und durch eine Vorrichtung nach Anspruch 10 gelöst. Die abhängigen Ansprüche enthalten die vorteilhaften Ausgestaltungen der Erfindungen.

In dem erfindungsgemäßen Verfahren zur Erkennung von Spätheimkehrerechos bei der Durchführung von Ultraschallscans an einem Untersuchungsobjekt werden nacheinander mittels eines Prüfkopfes Ultraschallpulse mit einem jeweiligen Zeitabstand von einem nachfolgenden Ultraschallpuls in das Untersuchungsobjekt zum Generieren von Pulsechos eingebracht und die Pulsechos detektiert. Dabei werden erfindungsgemäß ein erster nachfolgender Ultraschallpuls mit einem ersten Zeitabstand von einem dem ersten nachfolgenden Ultraschallpuls unmittelbar vorhergehenden ersten Ultraschallpuls und ein zweiter nachfolgender Ultraschallpuls mit einem von dem ersten Zeitabstand verschiedenen zweiten Zeitabstand von einem dem zweiten nachfolgenden Ultraschallpuls unmittelbar vorhergehenden zweiten Ultraschallpuls in das Untersuchungsobjekt eingebracht.

Die Erfindung ermöglicht, von Spätheimkehrerechos hervorgerufene Fehler zu erkennen, weil aufgrund der geänderten Zeitabstände zwischen den Ultraschallpulsen Spätheimkehrerechos jeweils mit einer bezogen auf den Zeitpunkt des Einbringens des letzten Ultraschallpulses entsprechend veränderten scheinbaren Laufzeit detektiert werden. Dies bedeutet, dass ein beim Durchlaufen des Untersuchungsobjektes mehrfach reflektiertes oder gestreutes Pulsecho mit der Veränderung der Zeitabstände zwischen den Ultraschallpulsen im Ultraschallbild wandern wird, weshalb einfach festgestellt werden kann, ob in dem Untersuchungsobjekt tatsächlich ein Reflektor an dem vermuteten Ort vorhanden ist, oder aber ein von einem vorhergehenden Ultraschallpuls ausgelöstes Spätheimkehrerecho für das Pulsecho verantwortlich ist. Erfindungsgemäß werden zwei aufeinanderfolgende Ultraschallbilder miteinander verglichen werden, um von Spätheimkehrerechos verursachte Artefakte zu erkennen und gegebenenfalls zu eliminieren.

Dabei kann der zweite Ultraschallpuls der erste nachfolgende Ultraschallpuls sein, der Zeitabstand also von einem Ultraschallpuls zum nächsten Ultraschallpuls verändert werden. Bei einer beispielhaften Anwendung der Erfindung im Rahmen von Ultraschall-Winkelscans können die Ultraschallpulse also auch demselben Ultraschall-Winkelscan angehören. Die Erfindung ist aber allgemein nicht auf den Einsatz bei Ultraschall-Winkelscans wie beispielsweise der Phased-Array-Technik beschränkt.

Alternativ können der erste Ultraschallpuls und der erste nachfolgende Ultraschallpuls einem ersten Ultraschallscan und der zweite Ultraschallpuls und der zweite nachfolgende Ultraschallpuls einem zweiten Ultraschallscan angehören. Typischerweise kann hierbei der Zeitabstand zwischen den Ultraschallpulsen für den ersten Ultraschallscan auf einen Wert und für den zweiten Ultraschallscan auf einen anderen Wert gesetzt werden.

Die ersten und zweiten Ultraschallscans können Ultraschall-Winkelscans sein. Dabei ist bevorzugt ein Einschallwinkel des ersten Ultraschallpulses gleich einem Einschallwinkel des zweiten Ultraschallpulses. Außerdem ist in diesem Fall ein Einschallwinkel des ersten nachfolgenden Ultraschallpulses gleich einem Einschallwinkel des zweiten nachfolgenden Ultraschallpulses.

Bei einer Ausführungsform der Erfindung werden die Ultraschallpulse abwechselnd mit dem ersten und dem zweiten Zeitabstand von einem jeweiligen nachfolgenden Ultraschallpuls in das Untersuchungsobjekt eingebracht.

Insbesondere können dabei ein n-ter Ultraschallpuls eines ersten Ultraschallscans mit dem ersten Zeitabstand zu einem (n+1)-ten Ultraschallpuls des ersten Ultraschallscans und ein n-ter Ultraschallpuls eines zweiten Ultraschallscans mit dem zweiten Zeitabstand zu einem (n+1)-ten Ultraschallpuls des zweiten Ultraschallscans in das Untersuchungsobjekt eingebracht werden.

Sind die Ultraschallscans Ultraschall-Winkelscans, kann während jedes Ultraschall-Winkelscans eine Reihenfolge der Einschallwinkel, unter denen die Ultraschallpulse in das Untersuchungsobjekt eingebracht werden, gleich sein.

Vorzugsweise unterscheidet sich der erste Zeitabstand um weniger als 20 Prozent von dem zweiten Zeitabstand. Dadurch können Spätheimkehrerechos ausreichend gut erkannt werden, ohne dass die Zeit für die Durchführung einer Ultraschalluntersuchung in unerwünschtem Maße verlängert wird. Erfindungsgemäß werden für jeden Ultraschallpuls die Zeitdauer vom Einschallen des Ultraschallpulses bis zum Empfang des oder der detektierten Pulsechos und die Intensität des oder der detektierten Pulsechos an eine Auswerteroutine weitergeleitet, woraufhin die Auswerteroutine daraus eine Bilddarstellung des Inneren des Untersuchungsobjekts generiert. Eine erste Bilddarstellung eines ersten Vergleichsultraschallscans wird mit einer zweiten Bilddarstellung eines zweiten Vergleichsultraschallscans verglichen und in Abhängigkeit von einem Vergleichsergebnis wird eine Ergebnisbilddarstellung generiert. Die Ergebnisbilddarstellung lässt dabei ein für einen bestimmten Ultraschallpuls mit einer bestimmten Zeitdauer vom Einschallen des Ultraschallpulses bis zum Empfang des oder der detektierten Pulsechos detektiertes Pulsecho des ersten oder zweiten Vergleichsultraschallscans unberücksichtigt, wenn in dem jeweils anderen Vergleichsultraschallscan des ersten oder zweiten Vergleichsultraschallscans für den entsprechenden Ultraschallpuls und die bestimmte Zeitdauer kein Pulsecho detektiert wurde. Diese Ausführungsform des erfindungsgemäßen Verfahrens eliminiert automatisch die aufgrund von Spätheimkehrerechos auftretenden Bildfehler. Es können allerdings auch andere Verfahren für diesen Zweck eingesetzt werden, beispielsweise Algorithmen, die aus der Unterdrückung von Bildrauschen bekannt sind.

Insbesondere kann dabei für den jeweils anderen Vergleichsultraschallscan kein Pulsecho detektiert werden, wenn die Intensität des für den bestimmten Ultraschallpuls und die bestimmte Zeitdauer detektierten Pulsechos um mehr als einen vorbestimmten Wert oder Faktor größer ist als eine Intensität eines Pulsechos in dem jeweils anderen Vergleichsultraschallscan. Diese speziellere Ausführungsform besitzt den Vorteil, dass beim Vergleich der beiden Ultraschallscans beziehungsweise der beiden Bilddarstellungen durch Messungenauigkeiten verursachte Abweichungen die Erstellung der Ergebnisbilddarstellung weniger stark verfälschen. Erfindungsgemäß wird eine logische UND-Verknüpfung der Intensitäten des für den bestimmten Ultraschallpuls und die bestimmte Zeitdauer detektierten Pulsechos der beiden Vergleichsultraschallscans vorgenommen.

Die Ultraschallpulse der beiden Vergleichsultraschallscans werden einander durch Vergleich der Parameter der jeweiligen Ultraschallpulse zugeordnet, wobei ein Ultraschallpuls eines Vergleichsultraschallscans einem Ultraschallpuls des anderen Vergleichsultraschallscans zugeordnet wird, wenn beide Ultraschallpulse die gleichen Parameter aufweisen. Im Fall von Ultraschall-Winkelscans ist der bestimmte Ultraschallpuls daher ein Ultraschallpuls, der unter einem bestimmten Einschallwinkel in das Untersuchungsobjekt eingebracht und dem der unter demselben Einschallwinkel eingebrachte Ultraschallpuls des jeweils anderen Vergleichsultraschallscans zugeordnet wird.

Ein zweiter Aspekt der Erfindung führt eine Vorrichtung zur Erkennung von Spätheimkehrerechos bei der Durchführung von Ultraschallscans an einem Untersuchungsobjekt ein, die einen zum Einbringen von Ultraschallpulsen mit einem jeweiligen Zeitabstand von einem nachfolgenden Ultraschallpuls in das Untersuchungsobjekt ausgebildeten Prüfkopf und eine mit dem Prüfkopf verbundene Steuereinheit zum Vorgeben des Einschallwinkels und des jeweiligen Zeitabstandes aufweist. Die Steuereinheit ist dabei dazu ausgebildet, das erfindungsgemäße Verfahren auszuführen.

Zwar wurde die vorliegende Erfindung im Hinblick auf die Erkennung von Wiederholungsechos ohne Verringerung der Puls-Folge-Frequenz beschrieben, jedoch besteht auch die Möglichkeit, die Puls-Folge-Frequenz zu erhöhen, ohne das Risiko von unerkannten Wiederholungsechos gegenüber den im Stand der Technik verwendeten Verfahren zu erhöhen. Dadurch kann die Messrate erhöht und somit die Dauer einer Messung verringert werden.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt das Einschallen einer Pulsfolge in ein Untersuchungsobjekt im Rahmen eines Ultraschall-Winkelscans in einer schematischen Darstellung.
- Figur 2: zeigt eine Pulsfolge gemäß einem ersten Ausführungsbeispiel der Erfindung.
- Figur 3: zeigt eine Pulsfolge gemäß einem zweiten Ausführungsbeispiel der Erfindung.

Die Erfindung wird nachfolgend am Beispiel von Ultraschall-Winkelscans beschrieben, kann jedoch auch im Rahmen von mit anderen Techniken durchgeführten Ultraschallscans eingesetzt werden, beispielsweise Ultraschalltechniken, bei denen ein Einschallwinkel der aufeinanderfolgenden Ultraschallpulse konstant ist.

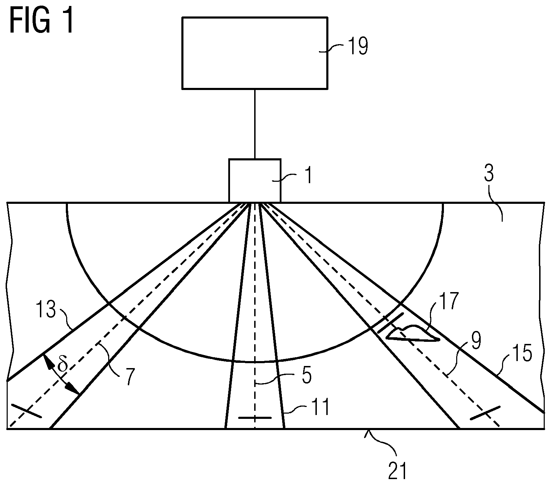

Figur 1 zeigt in einer schematisierten Darstellung das Einschallen von Ultraschallpulsen mittels eines Prüfkopfes 1 in ein Untersuchungsobjekt 3, dass beispielsweise ein Turbinenbauteil wie etwa eine Leit- oder Laufschaufel einer Gasturbine sein kann.

Ausgehend vom Ultraschallprüfkopf 1 werden zum Durchführen eines Ultraschall-Winkelscans nacheinander Ultraschallpulse unter einer Vielzahl von Einschallwinkeln in das Untersuchungsobjekt 3 eingeschallt. In der Figur sind dabei drei unter verschiedenen Einschallwinkeln eingeschallte Ultraschallpulse anhand ihrer Schallkegel 11, 13, 15 exemplarisch dargestellt. Die Einschallrichtungen der Pulse sind in der Figur als Mittelachsen 5, 7, 9 der die Ultraschallpulse repräsentierenden Schallkegel 11, 13, 15 dargestellt. Es sei an dieser Stelle darauf hingewiesen, dass die tatsächliche Zahl an Einschallpulsen, die unter verschiedenen Einschallwinkeln in das Untersuchungsobjekt eingeschallt werden in der Regel deutlich größer ist als drei.

Ultraschallpulse breiten sich in einem kontinuierlichen Medium entlang einer Ausbreitungsrichtung aus und weisen ein Intensitätsmaximum auf. Die Intensität des Ultraschallpulses nimmt senkrecht zur Ausbreitungsrichtung beiderseits des Intensitätsmaximums schnell ab. Üblicherweise wird eine Begrenzung des Ultraschallpulses an denjenigen Abständen vom jeweiligen Intensitätsmaximum definiert, bei denen die Intensität gegenüber dem jeweiligen Intensitätsmaximum um einen bestimmten Betrag beziehungsweise Faktor abgenommen hat. Die Begrenzung des Ultraschallpulses beschreibt dabei einen Winkel, der als Öffnungswinkel δ bezeichnet wird, der dem Divergenzwinkel des Prüfkopfes 1 entspricht.

Die in das Untersuchungsobjekt 3 eingeschallten Ultraschallpulse erzeugen Echos, aus denen ein Bild der inneren Struktur des Untersuchungsobjektes 3 gewonnen werden kann. Hierzu werden Pulsechos der eingeschallten Ultraschallpulse detektiert und im Hinblick auf ihre Intensität und die Richtung, aus der das Echo den Prüfkopf 1 erreicht, analysiert.

Aus dem Analyseergebnis erstellt eine Steuereinheit 19, die beispielsweise als Digitaler Signalprozessor (DSP) oder als Application Specific Integrated Circuit (ASIC) realisiert sein kann, dann ein Bild der inneren Struktur des Untersuchungsobjektes 3.

Beim Erstellen des Bildes vom Inneren des Untersuchungsobjektes 3 wird in Richtung jedes Einschallwinkels ein sogenannter A-Scan (Amplitudenscan) durchgeführt, in dem die Amplitudenhöhe als Funktion der Laufzeit vom Einschallen des Pulses bis zum Empfang des Echos gemessen wird. Anschließend wird das Bild aus den unter den verschiedenen Einschallwinkeln des Winkelscans gewonnenen A-Scans zusammengesetzt. Liegen alle Einschallwinkel innerhalb einer Ebene, so entspricht das zusammengesetzte Bild einem sogenannten B-Scan, dem Bild eines zweidimensionalen Schnittes durch das Untersuchungsobjekt 3. Man spricht hierbei auch von einem Ultraschall-Winkelscan.

Aus mehreren parallel verlaufenden B-Scans kann dann bspw. ein dreidimensionales Bild des Untersuchungsobjektes 3 gewonnen werden.

Zum eigentlichen Durchführen des Winkelscans werden Ultraschallpulse in zeitlich kurzen Abständen, die durch die Puls-Folge-Frequenz bestimmt sind, mit unterschiedlichen Einschallwinkeln in das Untersuchungsobjekt 3 eingebracht. Dabei entstehen Pulsechos an inneren Strukturen des Untersuchungsobjektes, die als Reflektor 17 wirken. Dies können beispielsweise Risse oder Kavitäten innerhalb der Gefügestruktur des Untersuchungsobjektes 3 sein.

Aus der Laufzeit bis zum Empfang des Impulsechos kann die Entfernung des Reflektors 17 zum Prüfkopf 1 bestimmt werden. Die Ausrichtung des Prüfkopfes 1 in dem Moment, als der für das empfangene Impulsecho ursächliche Ultraschallpuls ausgesendet wurde, liefert dann die verbleibenden Raumkoordinaten, so dass der Ort des Reflektors 17 abgeleitet werden kann. Dies gelingt jedoch nur dann korrekt, wenn das Impulsecho nicht von einem während einer anderen Ausrichtung des Prüfkopfes 1 ausgesendeten früheren Ultraschallpuls erzeugt wurde, beispielsweise als Spätheimkehrerecho an einer entfernten Wandung des Untersuchungsobjektes 3. In einem solchen Fehlerfall würde ein deutlich näher am Prüfkopf 1 und in einer anderen Richtung als die des tatsächlichen Ursprungsortes des Impulsechos gelegener Reflektor angenommen, der jedoch gar nicht existiert.

Bei vielen Untersuchungsobjekten entstehen nämlich nicht nur Echos an inneren Strukturen des Untersuchungsobjektes 3, sondern beispielsweise auch an der Wand 21 des Untersuchungsobjektes 3, die das Untersuchungsobjekt durchwandern und schließlich den Prüfkopf 1 erreichen können. Diese Echos liefern jedoch keine relevante Information über das innere Gefüge des Untersuchungsobjektes 3. Allerdings können diese Folgeechos den Winkelscan stören, wenn sie zeitlich den Prüfkopf 1 erst dann erreichen, wenn weitere Ultraschallpulse (nachfolgend Folgepulse genannt) bereits in das Untersuchungsobjekt 3 eingeschallt sind oder sogar ein nachfolgender Ultraschallscan bzw. Ultraschallwinkelscan begonnen wurde. Wenn das Wiederholungsecho dann aus einer Richtung eintrifft, die ungefähr der Einschallrichtung eines Folgepulses entspricht, kann das Wiederholungsecho fälschlicherweise als Echo des Folgepulses missinterpretiert werden, was zu einem Fehler im A-Scan des Folgepulses - und damit zu einem Fehler im Bild des Untersuchungsobjektes 3 - führen kann.

Im Rahmen der vorliegenden Erfindung erfolgt das Einschallen aufeinander folgender Ultraschallpulse in das Untersuchungsobjekt 3 daher mit unterschiedlichen Zeitabständen zwischen aufeinanderfolgenden Ultraschallpulsen, so dass ein spätes Pulsecho beim Prüfkopf relativ zum Einschallen des nächsten Ultraschallpulses mit unterschiedlichen Zeitabständen eintrifft, wodurch Spätheimkehrerechos einfach zu erkennen sind.

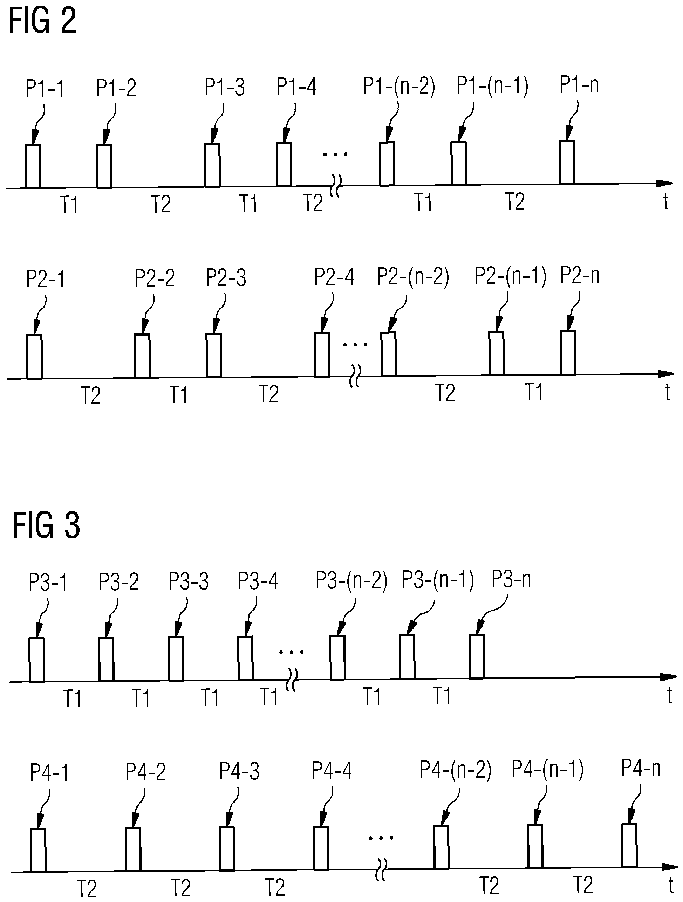

Figur 2 zeigt eine Pulsfolge gemäß einem ersten Ausführungsbeispiel der Erfindung. Die Abbildung zeigt einen ersten Zeitstrahl mit Ultraschallpulsen P1-1 bis P1-n, die einem ersten Ultraschall-Winkelscan angehören, und einen zweiten Zeitstrahl mit Ultraschallpulsen P2-1 bis P2-n, die einem zweiten Ultraschall-Winkelscan, beispielsweise einen direkt auf den ersten Ultraschall-Winkelscan folgenden Ultraschall-Winkelscan, angehören. In den Zeitstrahlen werden die Zeitabstände zwischen den Ultraschallpulsen angegeben, wobei T1 für einen ersten Zeitabstand und T2 für einen zweiten Zeitabstand steht. Der zweite Zeitabstand T2 ist dabei länger als der erste Zeitabstand T1. In dem von Figur 2 illustrierten ersten Ausführungsbeispiel werden in dem ersten und zweiten Ultraschall-Winkelscan die Ultraschallpulse abwechselnd mit dem ersten und dem zweiten Zeitabstand eingeschallt. Bei dem ersten Ultraschall-Winkelscan wird ein zweiter Ultraschallpuls P1-2 um den ersten Zeitabstand T1 später als ein erster Ultraschallpuls P1-1 ausgesendet, ein dritter Ultraschallpuls P1-3 folgt dem zweiten Ultraschallpuls P1-2 nach der zweiten Zeitabstand T2. Beim zweiten Ultraschall-Winkelscan folgt dann ein zweiter Ultraschallpuls P2-2 einem ersten Ultraschallpuls P2-1 mit dem zweiten Zeitabstand T2, so dass für jedes Paar von direkt aufeinanderfolgenden Ultraschallpulsen zwischen dem Paar von Ultraschallpulsen in einem der beiden Ultraschall-Winkelscans der erste Zeitabstand T1 und in dem jeweils anderen der beiden Ultraschall-Winkelscans der zweite Zeitabstand liegt. Bei dieser Ausführungsform der Erfindung ist vorteilhafterweise die Dauer jedes Ultraschall-Winkelscans gleich oder nahezu gleich. Allerdings ist es vorstellbar, dass ein Spätheimkehrerecho eines Ultraschallpulses P1-1 oder P2-1 ein falsches Pulsecho erzeugt, das nach einem Ultraschallpuls P1-3 bzw. P2-3 vom Prüfkopf detektiert wird. Ein solches Spätheimkehrerecho kann mit dem gezeigten Ausführungsbeispiel der Erfindung nicht erkannt werden, weil der Zeitabstand zwischen einem Ultraschallpuls und dem übernächsten Ultraschallpuls konstant ist. In solchen Fällen können Ausführungsformen der Erfindung mit mehr als zwei verschiedenen Zeitabständen und mit mehr als zwei unterschiedlichen Abfolgen von Zeitabständen zwischen den einzelnen Ultraschallpulsen abhelfen.

Figur 3 zeigt eine Pulsfolge gemäß einem zweiten Ausführungsbeispiel der Erfindung. Die Abbildung zeigt ähnlich der Figur 2 einen ersten Zeitstrahl mit Ultraschallpulsen P3-1 bis P3-n, die einem ersten Ultraschall-Winkelscan angehören, und einen zweiten Zeitstrahl mit Ultraschallpulsen P4-1 bis P4-n, die einem zweiten Ultraschall-Winkelscan, beispielsweise einen direkt auf den ersten Ultraschall-Winkelscan folgenden Ultraschall-Winkelscan, angehören. Im Unterschied zu dem Ausführungsbeispiel der Figur 2 weisen alle Ultraschallpulse P3-1 bis P3-n des ersten Ultraschall-Winkelscans denselben Zeitabstand, hier den ersten Zeitabstand T1, und alle Ultraschallpulse P4-1 bis P4-n des zweiten Ultraschall-Winkelscans den zweiten Zeitabstand T2 auf. Dadurch können ebenfalls Probleme wie die oben zum Abschluss der Beschreibung der Figur 2 erwähnten vermieden werden. Allerdings besitzt diese Ausführungsform der Erfindung den Nachteil, dass die ersten und zweiten Ultraschall-Winkelscans unterschiedliche Messdauern besitzen.

Die vorliegende Erfindung wurde unter Bezugnahme auf die Figuren anhand konkreter Ausführungsbeispiele beschrieben. Abwandlungen von diesen Ausführungsbeispielen sind jedoch möglich.

## Patentansprüche

1. Ein Verfahren zur Erkennung von Spätheimkehrerechos bei der Durchführung von Ultraschallscans an einem Untersuchungsobjekt (3),
wobei nacheinander mittels eines Prüfkopfes (1) Ultraschallpulse (P1-1, ..., P1-n; P2-1,..., P2-n; P3-1,..., P3-n; P4-1,..., P4-n) mit einem jeweiligen Zeitabstand (T1, T2) von einem nachfolgenden Ultraschallpuls in das Untersuchungsobjekt (3) zum Generieren von Pulsechos eingebracht und die Pulsechos detektiert werden,
bei dem ein erster nachfolgender Ultraschallpuls mit einem ersten Zeitabstand (T1) von einem dem ersten nachfolgenden Ultraschallpuls unmittelbar vorhergehenden ersten Ultraschallpuls und ein zweiter nachfolgender Ultraschallpuls mit einem von dem ersten Zeitabstand (T1) verschiedenen zweiten Zeitabstand (T2) von einem dem zweiten nachfolgenden Ultraschallpuls unmittelbar vorhergehenden zweiten Ultraschallpuls in das Untersuchungsobjekt (3) eingebracht wird,
bei dem für jeden Ultraschallpuls die Zeitdauer vom Einschallen des Ultraschallpulses bis zum Empfang des oder der detektierten Pulsechos und die Intensität des oder der detektierten Pulsechos an eine Auswerteroutine weitergeleitet werden und die Auswerteroutine daraus eine Bilddarstellung des Inneren des Untersuchungsobjekts (3) generiert,
bei dem eine erste Bilddarstellung eines ersten Vergleichsultraschallscans mit einer zweiten Bilddarstellung eines zweiten Vergleichsultraschallscans verglichen wird und in Abhängigkeit von einem Vergleichsergebnis eine Ergebnisbilddarstellung generiert wird,
wobei die Ergebnisbilddarstellung ein für einen bestimmten Ultraschallpuls mit einer bestimmten Zeitdauer vom Einschallen des Ultraschallpulses bis zum Empfang des oder der detektierten Pulsechos detektiertes Pulsecho des ersten oder zweiten Vergleichsultraschallscans unberücksichtigt lässt, wenn in dem jeweils anderen Vergleichsultraschallscan des ersten oder zweiten Vergleichsultraschallscans für den entsprechenden Ultraschallpuls und die bestimmte Zeitdauer kein Pulsecho detektiert wurde,
**dadurch gekennzeichnet, dass**
eine logische UND-Verknüpfung der Intensitäten des für den bestimmten Ultraschallpuls und die bestimmte Zeitdauer detektierten Pulsechos der beiden Vergleichsultraschallscans vorgenommen wird.

2. Das Verfahren nach dem vorhergehenden Anspruch,
bei dem der zweite Ultraschallpuls der erste nachfolgende Ultraschallpuls ist.

3. Das Verfahren nach Anspruch 1,
bei dem der erste Ultraschallpuls und der erste nachfolgende Ultraschallpuls einem ersten Ultraschallscan und der zweite Ultraschallpuls und der zweite nachfolgende Ultraschallpuls einem zweiten Ultraschallscan angehören.

4. Das Verfahren nach dem vorhergehenden Anspruch,
bei dem die Ultraschallscans Ultraschall-Winkelscans sind und bei dem ein Einschallwinkel des ersten Ultraschallpulses gleich einem Einschallwinkel des zweiten Ultraschallpulses und bei dem ein Einschallwinkel des ersten nachfolgenden Ultraschallpulses gleich einem Einschallwinkel des zweiten nachfolgenden Ultraschallpulses sind.

5. Das Verfahren nach einem der vorhergehenden Ansprüche,
bei dem die Ultraschallpulse abwechselnd mit dem ersten und dem zweiten Zeitabstand von einem jeweiligen nachfolgenden Ultraschallpuls in das Untersuchungsobjekt (3) eingebracht werden.

6. Das Verfahren nach dem vorhergehenden Anspruch,
bei dem ein n-ter Ultraschallpuls eines ersten Ultraschallscans mit dem ersten Zeitabstand zu einem (n+1)-ten Ultraschallpuls des ersten Ultraschallscans und bei dem ein n-ter Ultraschallpuls eines zweiten Ultraschallscans mit dem zweiten Zeitabstand zu einem (n+1)-ten Ultraschallpuls des zweiten Ultraschallscans in das Untersuchungsobjekt (3) eingebracht werden.

7. Das Verfahren nach einem der vorhergehenden Ansprüche,
bei dem die Ultraschallscans Ultraschall-Winkelscans sind und bei dem während jedes Ultraschall-Winkelscans eine Reihenfolge der Einschallwinkel, unter denen die Ultraschallpulse in das Untersuchungsobjekt (3) eingebracht werden, gleich ist.

8. Das Verfahren nach einem der vorhergehenden Ansprüche,
bei dem der erste Zeitabstand sich um weniger als 20 Prozent von dem zweiten Zeitabstand unterscheidet.

9. Das Verfahren nach einem der vorhergehenden Ansprüche,
bei dem für den jeweils anderen Vergleichsultraschallscan kein Pulsecho detektiert wird, wenn die Intensität des für den bestimmten Ultraschallpuls und die bestimmte Zeitdauer detektierten Pulsechos um mehr als einen vorbestimmten Wert oder Faktor größer ist als eine Intensität eines Pulsechos in dem jeweils anderen Vergleichsultraschallscan.

10. Eine Vorrichtung zur Erkennung von Spätheimkehrerechos
bei der Durchführung von Ultraschallscans an einem Untersuchungsobjekt (3), die einen zum Einbringen von Ultraschallpulsen mit einem jeweiligen Zeitabstand von einem nachfolgenden Ultraschallpuls in das Untersuchungsobjekt (3) ausgebildeten Prüfkopf (1) und eine mit dem Prüfkopf (1) verbundene Steuereinheit (19) zum Vorgeben des jeweiligen Zeitabstandes aufweist,
**dadurch gekennzeichnet, dass**
die Steuereinheit (19) ausgebildet ist, das Verfahren von einem der vorhergehenden Ansprüche auszuführen.

## Claims

1. Method for recognizing ghost echoes when carrying out ultrasound scans on a test object (3),
wherein, for the purposes of producing pulse echoes, ultrasonic pulses (P1-1, ..., P1-n; P2-1, ..., P2-n; P3-1, ..., P3-n; P4-1, ..., P4-n) are successively introduced into the test object (3) with a respective time gap (T1, T2) from a subsequent ultrasonic pulse by means of a test head (1), and the pulse echoes are detected,
wherein a first subsequent ultrasonic pulse is introduced into the test object (3) with a first time gap (T1) from a first ultrasonic pulse immediately preceding the first subsequent ultrasonic pulse and a second subsequent ultrasonic pulse is introduced into the test object (3) with a second time gap (T2), which differs from the first time gap (T1), from a second ultrasonic pulse immediately preceding the second subsequent ultrasonic pulse,
wherein, for each ultrasonic pulse, the time duration from insonating the ultrasonic pulse to receiving the detected pulse echo or echoes and the intensity of the detected pulse echo or echoes are transmitted to an evaluation routine and the evaluation routine produces a pictorial representation of the interior of the test object (3) therefrom,
wherein a first pictorial representation of a first comparison ultrasound scan is compared to a second pictorial representation of a second comparison ultrasound scan and a resultant pictorial representation is produced depending on a comparison result,
wherein the resultant pictorial representation leaves a pulse echo of the first or second comparison ultrasound scan that is detected for a specific ultrasonic pulse with a specific time duration from insonating the ultrasonic pulse to receiving the detected pulse echo or echoes unconsidered if, in the respective other comparison ultrasound scan of the first or second comparison ultrasound scan, no pulse echo was detected for the corresponding ultrasonic pulse and the determined time duration,
**characterized in that**
a logic AND operation is performed on the intensities of the pulse echo, detected for the specific ultrasonic pulse and the specific time duration, of the two comparison ultrasound scans.

2. Method according to the preceding claim,
wherein the second ultrasonic pulse is the first subsequent ultrasonic pulse.

3. Method according to Claim 1,
wherein the first ultrasonic pulse and the first subsequent ultrasonic pulse are part of a first ultrasound scan and the second ultrasonic pulse and the second subsequent ultrasonic pulse are part of a second ultrasound scan.

4. Method according to the preceding claim,
wherein the ultrasound scans are ultrasound angle scans and wherein an insonation angle of the first ultrasonic pulse equals an insonation angle of the second ultrasonic pulse and wherein an insonation angle of the first subsequent ultrasonic pulse equals an insonation angle of the second subsequent ultrasonic pulse.

5. Method according to any one of the preceding claims, wherein the ultrasonic pulses are alternately introduced into the test object (3) with the first time gap and the second time gap from a respective subsequent ultrasonic pulse.

6. Method according to the preceding claim,
wherein an n-th ultrasonic pulse of a first ultrasound scan is introduced into the test object (3) with the first time gap from an (n+1)-th ultrasonic pulse of the first ultrasound scan and wherein an n-th ultrasonic pulse of a second ultrasound scan is introduced into the test object (3) with the second time gap from an (n+1)-th ultrasonic pulse of the second ultrasound scan.

7. Method according to any one of the preceding claims, wherein the ultrasound scans are ultrasound angle scans and wherein, during each ultrasound angle scan, a sequence of the insonation angles, at which the ultrasonic pulses are introduced into the test object (3), is the same.

8. Method according to any one of the preceding claims, wherein the first time gap differs from the second time gap by less than 20 percent.

9. Method according to any one of the preceding claims, wherein no pulse echo is detected for the respective other comparison ultrasound scan if the intensity of the pulse echo that is detected for the specific ultrasonic pulse and the specific time duration is greater than an intensity of a pulse echo in the respective other comparison ultrasound scan by more than a predetermined value or factor.

10. Apparatus for recognizing ghost echoes when carrying out ultrasound scans on a test object (3), said apparatus comprising a test head (1) that is embodied to introduce ultrasonic pulses into the test object (3) with a respective time gap from a subsequent ultrasonic pulse, and a control unit (19) for predetermining the respective time gap that is connected to the test head (1),
**characterized in that**
the control unit (19) is embodied to carry out the method according to any one of the preceding claims.

## Revendications

1. Procédé de détection d'échos à retour tardif, lorsque l'on effectue des balayages par ultrasons sur un objet (3) à étudier,
dans lequel on introduit, pour créer des échos d'impulsions dans l'objet (3) à étudier, les unes après les autres, au moyen d'une tête (1) de contrôle, des impulsions (P1-1, ..., P1-n; P2-1,..., P2-n; P3-1,..., P3-n; P4-1,..., P4-n) d'ultrasons, à une distance (T1, T2), dans le temps respective, d'une impulsion d'ultrasons suivante et on détecte les échos des impulsions,
dans lequel on introduit, dans l'objet (3) à étudier, une première impulsion d'ultrasons suivante à une première distance (T1) dans le temps, d'une première impulsion d'ultrasons immédiatement précédente, de la première impulsion d'ultrasons suivante, et une deuxième impulsion d'ultrasons suivante, à une deuxième distance (T2) dans le temps différente de la première distance (T1) dans le temps, d'une deuxième impulsion d'ultrasons immédiatement précédente de la deuxième impulsion d'ultrasons suivante,
dans lequel, pour chaque impulsion d'ultrasons, on achemine, à un protocole d'exploitation, la durée allant de l'incidence de l'impulsion d'ultrasons jusqu'à la réception du ou des échos d'impulsion détectés et l'intensité du ou des échos d'impulsion détectés et le protocole d'exploitation en crée une représentation en image de l'intérieur de l'objet (3) à étudier,
dans lequel on compare une première représentation en image d'un premier balayage d'ultrasons de comparaison à une deuxième représentation en image d'un deuxième balayage d'ultrasons de comparaison, et on crée une représentation en image de résultat en fonction d'un résultat de la comparaison, dans lequel la représentation en image de comparaison néglige, pour une impulsion d'ultrasons déterminée ayant une durée déterminée de l'incidence de l'impulsion d'ultrasons jusqu'à la réception du ou des échos d'impulsion détectés, un écho d'impulsion détecté du premier ou du deuxième balayage d'ultrasons de comparaison, s'il n'a pas été détecté d'écho d'impulsion dans l'autre balayage d'ultrasons de comparaison du premier ou du deuxième balayage d'ultrasons de comparaison, pour l'impulsion d'ultrasons correspondante et la durée déterminée,
**caractérisé en ce que**
on effectue une combinaison logique ET des intensités de l'écho d'impulsion, détecté pour l'impulsion d'ultrasons déterminée et la durée déterminée, les deux balayages d'ultrasons de comparaison.

2. Procédé suivant la revendication précédente,
dans lequel la deuxième impulsion d'ultrasons est la première impulsion d'ultrasons suivante.

3. Procédé suivant la revendication 1,
dans lequel la première impulsion d'ultrasons et la première impulsion d'ultrasons suivante appartiennent à un premier balayage d'ultrasons, et la deuxième impulsion d'ultrasons et la deuxième impulsion d'ultrasons suivante à un deuxième balayage d'ultrasons.

4. Procédé suivant la revendication précédente,
dans lequel les balayages d'ultrasons sont des balayages angulaires d'ultrasons et dans lequel un angle d'incidence de la première impulsion d'ultrasons est égal à un angle d'incidence de la deuxième impulsion d'ultrasons, et dans lequel un angle d'incidence de la première impulsion d'ultrasons suivante est égal à un angle d'incidence de la deuxième impulsion d'ultrasons suivante.

5. Procédé suivant l'une des revendications précédentes,
dans lequel on introduit, dans l'objet (3) à étudier, les impulsions d'ultrasons ayant en alternance le premier et le deuxième intervalle de temps, par rapport à une impulsion d'ultrasons suivante respective.

6. Procédé suivant la revendication précédente,
dans lequel on introduit, dans l'objet (3) à étudier, une énième impulsion d'ultrasons d'un premier balayage d'ultrasons, au premier intervalle de temps par rapport à une (n + 1) énième impulsion d'ultrasons du premier balayage d'ultrasons, et dans lequel on introduit une énième impulsion d'ultrasons d'un deuxième balayage d'ultrasons, au deuxième intervalle de temps par rapport à une (n + 1) énième impulsion d'ultrasons du deuxième balayage d'ultrasons.

7. Procédé suivant l'une des revendications précédentes,
dans lequel
les balayage d'ultrasons sont des balayages angulaires d'ultrasons et dans lequel, pendant chaque balayage angulaire d'ultrasons, les angles d'incidence successifs, sous lesquels on introduit les impulsions d'ultrasons dans l'objet (3) à étudier, sont pareils.

8. Procédé suivant l'une des revendications précédentes,
dans lequel le premier intervalle de temps se distingue de moins de 20 pour cent du deuxième intervalle de temps.

9. Procédé suivant l'une des revendications précédentes,
dans lequel on ne détecte pas d'écho d'impulsion pour l'autre balayage d'ultrasons de comparaison, si l'intensité de l'écho d'impulsion détecté pour l'impulsion d'ultrasons déterminée et pour la durée déterminée, est plus grande de plus d'une valeur ou d'un facteur déterminé à l'avance qu'une intensité d'un écho d'impulsions dans l'autre balayage d'ultrasons de comparaison.

10. Dispositif de détection d'échos à retour tardif, lorsque l'on effectue des balayages d'ultrasons sur un objet (3) à étudier, qui a une tête (1) de contrôle constituée pour introduire des impulsions d'ultrasons à un intervalle de temps respectif d'une impulsion d'ultrasons suivante, dans l'objet (3) à étudier, et une unité (19) de commande reliée à la tête (1) de contrôle pour prescrire l'intervalle de temps, **caractérisé en ce que**
l'unité (19) de commande est constituée pour exécuter le procédé de l'une des revendications précédentes.
